Europäisches Patentamt

European Patent Office

Office européen des brevets

(19)

(11)  **EP 1 306 961 A1**

(12)  **EUROPÄISCHE PATENTANMELDUNG**

(43) Veröffentlichungstag:
02.05.2003  Patentblatt 2003/18

(51) Int Cl.⁷: **H02K 19/10**

(21) Anmeldenummer: **01125178.2**

(22) Anmeldetag: **23.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Leister Process Technologies
6060 Sarnen (CH)**

(72) Erfinder:
• **von Wyl, Bruno
6056 Kägiswil (CH)**

• **Gerber, Tobias
8604 Volketswil (CH)**

(74) Vertreter: **Klocke, Peter, Dipl.-Ing.
ABACUS Patentanwälte
Klocke Späth Barth
European Patent and Trademark Attorneys
Kappelstrasse 8
72160 Horb (DE)**

(54)  **Zweiphasiger elektronischer Reluktanz-Aussenläufermotor**

(57)    Zweiphasiger elektronischer Reluktanz-Außenläufermotor mit einem becherförmigen Gehäuse einem glockenförmig ausgebildetem Rotor, der an dem Gehäuse gelagert ist und ein ringförmiges Blechpaket mit gleichmäßig verteilten abwechselnd unterschiedlich breiten Stegen aufweist, einem Stator mit einem kreuzförmigen Blechpaket mit vier auf einem Ring senkrecht zueinander angeordneten Schenkeln, auf denen die Statorwicklungen aufgebracht sind, wobei die beiden dadurch gebildeten gegenüberliegenden Spulen so verbunden sind, dass sich das Magnetfeld addiert,einem Statorflansch mit einem rohrförmigen Mittelzapfen wobei der Statorflansch stirnseitig das becherförmige Gehäuse verschließt, durch den Mittelzapfen eine Antriebswelle, die mit dem Rotor verbunden ist, geführt und in dem Statorflansch gelagert ist. Ein derart ausgestalteter Motor zusammen mit besonderen Größenverhältnissen der Rotorund Statorbleche ermöglicht die Benutzung im Dauerbetrieb. Durch die Ausgestaltung wird ein optimales Drehmoment, wie es beispielsweise bei Heißluftgebläsen und Gebläsen erforderlich ist, realisiert. Ein derartiger Motor ist kosten- und bauvolumenoptimiert für unterschiedliche Spannungsbereiche im Wechselspannungsnetz mit unterschiedlichen Frequenzen.

Fig. 3

EP 1 306 961 A1

**Beschreibung**

Die vorliegende Erfindung betrifft einen zweiphasigen elektronischen Reluktanz-Außenläufermotor, insbesondere für Dauerbetriebsanwendungen.

Für den Dauerbetrieb von kleineren Geräten, beispielsweise Heißluftgeräte, Gebläse, die insbesondere in der Fertigung eingesetzt werden und im Dauerbetrieb laufen müssen, werden heute in der Regel Asynchronmotoren verwendet. Derartige Asynchronmotoren sind relativ aufwendig in der Herstellung und nehmen bei dem jeweiligen Gerät ein größeres Volumen ein. Diese Motoren benötigen üblicherweise ein Drehstromnetz und sind in der Drehzahl frequenzabhängig. In den Handgeräten werden kleine Bauvolumen der Motoren jedoch benötigt, so dass aus Platz- und Kostengründen heute üblicherweise Kollektormotoren eingesetzt werden, die jedoch nicht wartungsfrei sind.

Der vorliegenden Erfindung liegt daher die Aufgabe zu Grunde, für den Einsatz im Dauerbetrieb einen Motor zu finden, der einen möglichst kompakten Aufbau aufweist, um möglichst kleine Abmessungen realisieren zu können, über einen größeren Spannungsbereich einsetzbar ist und darüber hinaus, ohne Permanentmagnete einbringen zu müssen, ein für den Dauerbetrieb optimales Drehmoment/Drehzahl-Verhältnis hat.

Diese Aufgabe wird erfindungsgemäß durch einen zweiphasigen elektronisch kommutierten Reluktanz-Außenläufermotor mit den Merkmalen des Anspruchs 1 gelöst. Weitere vorteilhafte Ausgestaltungen sind den Unteransprüchen zu entnehmen.

Reluktanzmotoren sind Synchronmotoren und allgemein bekannt. Es gibt verschiedene Bauarten solcher Reluktanzmotoren, insbesondere auch von Reluktanz-Außenläufermotoren. Zur Lösung der Aufgabe hat es sich gezeigt, dass der Aufbau als zweiphasiger elektronisch kommutierter Reluktanz-Außenläufermotor besonders vorteilhaft ist. Die elektronische Ansteuerung führt die Kommutierung, die Regelung des Spulenstroms sowie die Regelung der Drehzahl durch. Der Motor weist ein becherförmiges Gehäuse auf, in dem ein glockenförmig ausgebildeter Rotor gelagert ist. Vorzugsweise sitzt der Rotor auf einer Antriebswelle und ist über diese in dem Gehäuse gelagert. Der Rotor wird durch ein ringförmiges Blechpaket mit einer Vielzahl parallel aufeinander liegender Bleche (in bekannter Art und Weise) gebildet, wobei die einzelnen Ringe gleichmäßig verteilte abwechselnd unterschiedlich breite Bereiche, im nachfolgenden als Stege bezeichnet, aufweist. Im Innenraum des Rotors befindet sich der Stator mit einem kreuzförmigen Blechpaket, bei dem auf einem Ring vier senkrecht zueinander angeordnete Schenkel abstehen, auf denen die Statorwicklungen aufgebracht sind. Die beiden gegenüber liegenden Spulen sind dabei so verbunden, dass sich das magnetische Feld addiert. Durch diesen Aufbau zusammen mit dem Rotor bilden sich am Umfang unterschiedlich breite Luftspalte zwischen dem Pol des Stators und dem gegenüber liegenden Bereich des Rotors aus, so dass immer abwechselnd sich an einem Pol jeweils eine Pollücke anschließt. Das becherförmige Gehäuse ist mit einem Statorflansch mit einem rohrförmigen Mittelzapfen verschlossen, wobei durch den Mittelzapfen die Antriebswelle, die mit dem Rotor verbunden ist, geführt und in dem Statorflansch gelagert ist. Durch diesen grundsätzlichen Motorenaufbau ist es möglich, einen Motor zu schaffen, der bei kleinstmöglichem Aufbau einen Dauerbetrieb mit einer Drehzahl von größer 50000 U/min ermöglicht. Zur Optimierung des Betriebsverhaltens, insbesondere des Drehmoment und der Drehzahl in Bezug auch auf den dabei erforderlichen Aufwand für die elektrische Kommutierung weist gemäß einer bevorzugten Ausführungsform das ringförmige Blechpaket abwechselnd sechs schmale Spaltstege und sechs breitere Polstege auf. Vorteilhafterweise ist das Verhältnis der Länge des Polstegs zur Länge des Spaltstegs $1 \pm 0,2$. Eine wesentlich größere Spaltbreite erhöht die maximale Drehzahl bei gleichzeitigem Verlust des Drehmoments. Eine größere Länge des Spaltsteges erhöht die maximale Drehzahl, führt aber zu einer Reduzierung des Drehmoments. Eine kleinere Breite des Spaltsteges ergibt einen runderen Lauf, führt aber ebenfalls zu einem Verlust an Drehmoment und maximaler Drehzahl.

Gemäß einer weiteren Ausbildung der Erfindung beträgt das Verhältnis der Breite der Spaltstege zur Breite der Polstege $0,65 \pm 0,15$. Wird dieses Verhältnis wesentlich größer, so nimmt das Drehmoment ab. Wird das Verhältnis wesentlich kleiner, so wird die Ausnutzung des zur Verfügung stehenden Raumes schlechter. Die Motorenlänge müsste dann vergrößert werden.

Gemäß einer weiteren Ausbildung weisen die Schenkel der Statorblechpakete an ihrem freien Ende eine Verbreiterung auf (Schenkelkopf) wobei diese Breite im wesentlichen der Länge der Polstege $\pm 20\%$ entspricht. Zu große Abweichungen ergeben eine momentfreie Zone, die zu einer Leistungsreduzierung führt.

Vorteilhafterweise weisen die Schenkel der Statorbleche eine Breite auf, die im wesentlichen das Zweifache der Breite der Spaltstege des Motors + maximal 20 % beträgt. Eine größere Breite der Schenkel der Statorbleche bedeutet weniger Platz für die Wicklung.

Gemäß einer weiteren bevorzugten Ausbildung ist die Breite des Statorrings mindestens genau so groß wie die Breite des Spaltsteges, vorzugsweise bis zu 30 % größer, da andernfalls ebenfalls der magnetische Widerstand erhöht und der magnetische Fluss eingegrenzt wird.

Zur Erfassung der augenblicklichen Stellung des Rotors im Anlauf sowie der Drehrichtung weist der Rotor im Anschluss an die Rotorblechpakete am freien Ende ein Sensorfühlerblech auf, das von einem am Statorflansch angeordneten Detektor, z.B. Hallsensor, Lichtschranke, etc., detektierbar ist.

Um sicher zu stellen, dass ein Anlauf des Motors immer in die richtige Drehrichtung erfolgt, ist vorteilhafterweise der Spalt zwischen den Polstegen und den Statorschenkeln in der Breite unterschiedlich ausgebildet, derart, dass der Spalt zu dem Rand des Spaltes hin breiter wird. Dies kann beispielsweise durch eine Beschneidung der Kante des Polsteges erfolgen.

Durch den erfindungsgemäß ausgestalteten Motor wird damit ein kleiner und für den Dauerbetrieb kostengünstig herstellbarer Motor zur Verfügung gestellt, der in einem breiten Spannungsbereich in Wechselstromnetz mit unterschiedlicher Frequenzen betrieben werden kann. Mittels einer entsprechend ausgestalteten Elektronik (Hardware und Software) kann der Motor direkt ohne zusätzliche Netzteile an Wechselstromnetze (AC) angeschlossen und betrieben werden. Darüber hinaus weist dieser Motor einem gegenüber dem Kollektormotoren reduzierten Geräuschpegel auf.

Nachfolgend wird die Erfindung anhand eines Ausführungsbeispiels in Verbindung mit den begleitenden Zeichnungen näher erläutert. Es stellen dar:

Figur 1     Eine perspektivische Ansicht des aufgeschnittenen Motors;
Figur 2     einen Längsschnitt durch den Motor;
Figur 3     die vergrößerte Darstellung eines Stator- und Rotorbleches und
Figur 4     die vergrößerte Darstellung eines Polsteges.

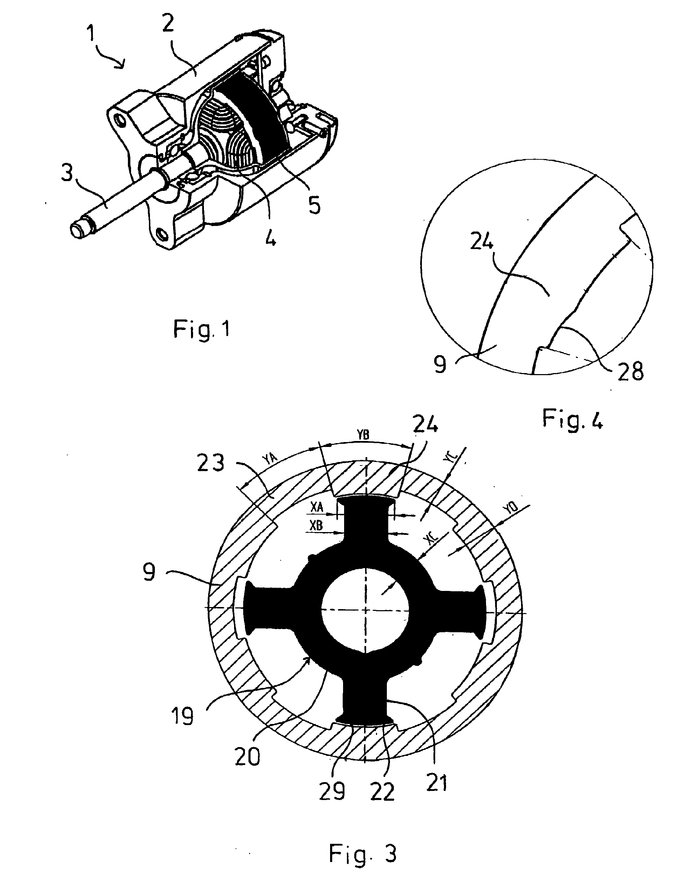

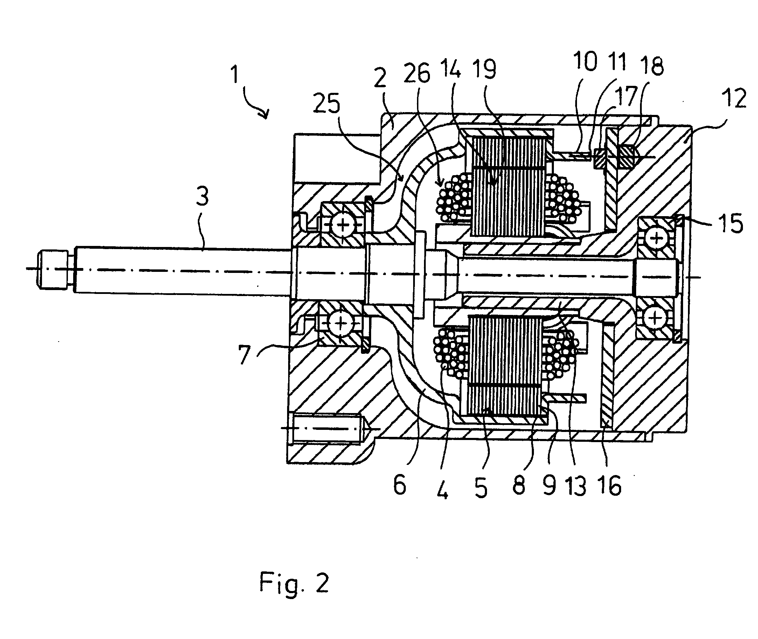

Figur 1 zeigt den Motor 1 mit dem Gehäuse 2 aus dem die Antriebswelle 3 herausragt, sowie die in dem Gehäuse 2 angeordneten Statorwicklungen 4 und das diese umgebende Rotorblechpaket 5.

Der genauere Aufbau des Motors ist aus der Schnittdarstellung gemäß Figur 2 ersichtlich. Das becherförmige Trägergehäuse 2 umschließt den glockenförmigen Rotorflansch 6, der auf der Antriebswelle 3 sitzt. Diese ist über das Kugellager 7 in dem Gehäuse 2 gelagert. Der Rotorflansch 6 weist in seinem weiten Bereich einen, den Innenumfang vergrößernden Absatz 8 auf, in dem ringförmige Rotorbleche 9, die in üblicher Weise zueinander elektrisch isoliert sind und zu einem Rotorblechpaket 5 verbunden sind, angeordnet sind. An dem an den Absatz 8 anschließenden freien Ende 10 des glockenförmigen Rotorflansches 6 befinden sich ein Sensor-Fühlerblech 11, das der Erkennung der Lage des Rotors der Drehzahl und Drehrichtung dient.

Das becherförmige Trägergehäuse 2 wird von einem Statorflansch 12 stirnseitig verschlossen. Dieser weist einen zentrischen rohrförmigen Mittelzapfen 13 auf, der das Statorblechpaket 14 trägt. Durch das Innere des Mittelzapfens 13 verläuft die Antriebswelle 3, die an ihrem Ende über ein zweites Kugellager 15 in dem Statorflansch 12 gelagert ist. Auf der dem Rotor zugewandten Seite des Startorflansches 12 befinden sich, beispielsweise auf einer Leiterplatte 16, elektronische Schaltkreise sowie einen Detektor 17 und ein Magnet 18, die dazu verwendet werden, zusammen mit den Sensorfühlblechen 11 die Rotorstellung und Drehrichtung zu ermitteln. Das Statorblechpaket 14 trägt die Statorwicklung 4 und besteht aus einzelnen Statorblechen 19, die in üblicher Weise mit Isolierlack überzogen und elektrisch voneinander getrennt sind. Das Statorblechpaket 14 ist genau gegenüber dem Rotorblechpaket 5 angeordnet.

Ein Statorblech 19 mit dem dieses umgebende Rotorblech 9 ist in der Figur 3 vergrößert dargestellt und zeigt das Statorblech 19 mit einem inneren Ring 20, an den sich kreuzförmig vier senkrecht zueinander stehende Statorschenkel 21 anschließen. Diese Statorschenkel 21 tragen die Statorwicklungen 4, wobei die auf zwei gegenüberliegenden Statorschenkel 21 angeordneten Spulen elektrisch so miteinander verbunden sind, dass sich das resultierende magnetische Feld addiert. Zwei gegenüberliegende Spulen bilden eine Phase. An dem freien Ende jedes Statorschenkels 21 befindet sich eine Verbreiterung 22, nachfolgend als Schenkelkopf bezeichnet. Die Breite des Statorrings 20 ist in der Figur mit XC, die Breite des Statorschenkels 21 mit XB und die Breite des Schenkelkopfs 22 mit XA bezeichnet. Das Rotorblech 9 weist sechs Spaltstege 23 und sechs Polstege 24 auf, die abwechselnd und gleichmäßig verteilt angeordnet sind. Damit folgt jedem Pol eine Pollücke, da die Länge YD der Polstege 24 größer ist als die Länge YC der Spaltstege 23. Dadurch ist der Spalt zwischen dem Schenkelkopf 22 und dem jeweiligen Steg einerseits möglichst minimal und im anderen Fall für den gewünschten magnetischen Fluss sowie die optimale Drehzahl und das optimale Drehmoment ausgebildet.

Die optimierten Längen und Breitenverhältnisse bzw. Beziehungen lauten wie folgt:

$$YB/YA = 1 \pm 0,2$$

$$YC/YD = 0,65 \pm 0,15$$

$$XB = 2 * YC + 0...20\ \%$$

$$XA = YB \pm 20\ \%$$

$$XC = YC + 0...30\ \%.$$

Figur 4 zeigt in vergrößerter Darstellung einen Polsteg 24, der im Bereich der einen Kante eine Beschneidung 28 aufweist, um damit die Drehung in immer die gleiche Richtung zu bewirken. Damit weist der Spalt 29 gemäß Figur 3 eine zum Rand des Spaltes zunehmende Breite auf.

In einem Ausführungsbeispiel wurde nach diesem Prinzip ein Motor mit einer Drehzahl von 33 000 Umdrehungen pro Minute gebaut, wobei die Länge des Motors ohne Antriebswelle 3, also nur das Gehäuse 2 mit Statorflansch 12, insgesamt 55 mm und der Außendurchmesser 43 mm betrug. Der Luftspalt zwischen dem Statorblechpaket 14 und dem Rotorblechpaket 5 betrug maximal 0,25 mm und der Außendurchmesser des Stators 28,5 mm und der Rotor 37 mm. Die Breite des Rotorblechpakets 5 und des Statorblechpakets 14 betrug 10 mm.

**Patentansprüche**

1. Zweiphasiger elektronischer Reluktanz-Außenläufermotor (1) mit einem becherförmigen Gehäuse (2) einem glockenförmig ausgebildetem Rotor (25), der an dem Gehäuse (2) gelagert ist und ein ringförmiges Blechpaket (5) mit gleichmäßig verteilten abwechselnd unterschiedlich breiten Stegen (23, 24) aufweist,
einem Stator (26) mit einem kreuzförmigen Blechpaket (14) mit vier auf einem Ring (20) senkrecht zueinander angeordneten Schenkeln (21), auf denen die Statorwicklungen (4) aufgebracht sind, wobei die beiden dadurch gebildeten gegenüberliegenden Spulen so verbunden sind, dass sich das Magnetfeld addiert,
einem Statorflansch (12) mit einem rohrförmigen Mittelzapfen (13) wobei der Statorflansch (12) stirnseitig das becherförmige Gehäuse (2) verschließt, durch den Mittelzapfen (13) eine Antriebswelle (3), die mit dem Rotor (25) verbunden ist, geführt und in dem Statorflansch (12) gelagert ist.

2. Motor nach Anspruch 1, **dadurch gekennzeichnet, dass** das ringförmige Rotorblechpaket (5) abwechselnd sechs schmalere Spaltstege (23) und sechs breitere Polstege (24) aufweist.

3. Motor nach Anspruch 1 oder 2, **dadurch gekennzeichnet, dass** das Verhältnis der Länge (YB) der Polstege (24) zur Länge (YA) der Spaltstege (23) 1 ± 0,2 beträgt.

4. Motor nach Anspruch 3, **dadurch gekennzeichnet, dass** das Verhältnis der Breite (YC) der Spaltstege (23) zur Breite (YD) der Polstege (24) 0,65 ± 0,15 beträgt.

5. Motor nach Anspruch 3, **dadurch gekennzeichnet**, das die Schenkel (21) der Statorbleche (19) an ihrem freien Ende (22) verbreitert sind und in ihrer Breite (XA) im wesentlichen der Polsteglänge (YB) ± 20 % entsprechen.

6. Motor nach einem der vorangegangenen Ansprüche, **dadurch gekennzeichnet, dass** die Breite (YB) der Schenkel (21) der Statorbleche (19) das zweifache der Breite (YC) der Spaltstege (23) ± 20 % beträgt.

7. Motor nach einem der vorangegangenen Ansprüche, **dadurch gekennzeichnet, dass** die Breite (YC) des Statorrings (20) wenigstens der Breite (YC) des Spaltsteges (23) entspricht, maximal bis zu 30 % breiter ist.

8. Motor nach einem der vorangegangenen Ansprüche, **dadurch gekennzeichnet, dass** der Rotor (25) im Anschluss an das Rotorblechpaket (5) am freien Ende (10) Sensorfühlerbleche (11) aufweist, die von einem am Statorflansch (12) angeordneten Detektor (17) detektierbar sind.

9. Motor nach einem der vorangegangenen Ansprüche, **dadurch gekennzeichnet, dass** der Spalt (29) zwischen den Polstegen (24) und den Statorschenkeln (21) in der Breite unterschiedlich ist und zum Rand des Spaltes breiter wird.

Fig. 1

Fig. 4

Fig. 3

Fig. 2

EP 1 306 961 A1

**Europäisches Patentamt**

**EUROPÄISCHER RECHERCHENBERICHT**

Nummer der Anmeldung

EP 01 12 5178

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|-----------|-----------------------------------------------------------------------|-------------------|------------------------------------------|
| Y | US 4 943 747 A (LEE JONG-SEOB) 24. Juli 1990 (1990-07-24) * Spalte 4, Zeile 37 - Spalte 4, Zeile 47; Abbildungen 2A-4A * | 1 | H02K19/10 |
| A | * Spalte 8, Zeile 40 - Spalte 8, Zeile 61 * | 2-9 | |
| Y | US 6 060 809 A (PENGOV WAYNE A) 9. Mai 2000 (2000-05-09) | 1 | |
| A | * Spalte 17, Zeile 63 - Spalte 19, Zeile 33; Abbildung 15 * | 2-9 | |
| A | DE 199 60 088 A (DAIMLER CHRYSLER AG) 15. März 2001 (2001-03-15) * Spalte 2, Zeile 13 - Spalte 2, Zeile 17; Abbildung 1 * | 1-9 | |
| A | WO 00 74204 A (LUNGU JANCU) 7. Dezember 2000 (2000-12-07) * Seite 1, Zeile 28 - Seite 1, Zeile 31; Abbildung 1 * | 1-9 | RECHERCHIERTE SACHGEBIETE (Int.Cl.7) |
| A | US 4 730 136 A (MUELLER ROLF) 8. März 1988 (1988-03-08) * Zusammenfassung; Abbildung 5 * | 1-9 | H02K |

Der vorliegende Recherchenbericht wurde für alle Patentansprüche erstellt

| Recherchenort | Abschlußdatum der Recherche | Prüfer |
|---------------|------------------------------|--------|
| MÜNCHEN | 27. März 2002 | Kugler, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 12 5178

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-03-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 4943747 | A | 24-07-1990 | DE | 3913501 A1 | 22-03-1990 |
| | | | FR | 2645687 A1 | 12-10-1990 |
| | | | GB | 2222729 A | 14-03-1990 |
| | | | JP | 2237454 A | 20-09-1990 |
| | | | KR | 9108678 Y1 | 26-10-1991 |
| | | | KR | 9108679 Y1 | 26-10-1991 |
| US 6060809 | A | 09-05-2000 | US | 5852334 A | 22-12-1998 |
| | | | AU | 718128 B2 | 06-04-2000 |
| | | | AU | 7446096 A | 07-05-1997 |
| | | | BR | 9611055 A | 28-12-1999 |
| | | | CA | 2234613 A1 | 24-04-1997 |
| | | | EP | 0878047 A1 | 18-11-1998 |
| | | | JP | 11513876 T | 24-11-1999 |
| | | | WO | 9715108 A1 | 24-04-1997 |
| | | | US | 5969454 A | 19-10-1999 |
| | | | US | 6051903 A | 18-04-2000 |
| | | | US | 6028385 A | 22-02-2000 |
| | | | US | 6046568 A | 04-04-2000 |
| | | | US | 6114789 A | 05-09-2000 |
| DE 19960088 | A | 15-03-2001 | DE | 19960088 A1 | 15-03-2001 |
| WO 0074204 | A | 07-12-2000 | WO | 0074204 A2 | 07-12-2000 |
| US 4730136 | A | 08-03-1988 | DE | 3149766 A1 | 02-09-1982 |
| | | | FR | 2497419 A1 | 02-07-1982 |

EPO FORM P0461

Für nähere Einzelheiten zu diesem Anhang : siehe Amtsblatt des Europäischen Patentamts, Nr. 12/82